# EUROPEAN PATENT APPLICATION

(11) **EP 4 769 763 A1**
(43) Date of publication of application: **01.07.2026**
(21) Application number: 25845200.2
(22) Date of filing: 09.07.2025
(51) Int. Cl.: H01M 50/367, H01M 50/383, H01M 50/291, H01M 50/317, H01M 50/249

(54) **BATTERY PACK AND VEHICLE INCLUDING SAME**

(30) Priority: 26.07.2024 KR 20240099335
(71) Applicant: LG Energy Solution, Ltd., Seoul 07335 (KR)
(72) Inventor: CHANG, Hyuk-Kyun, Daejeon 34122 (KR); KIM, Soo-Youl, Daejeon 34122 (KR); PARK, Gi-Chan, Daejeon 34122 (KR)
(74) Representative: BCKIP Part mbB
(86) International application number: PCT/KR2025/009928
(87) International publication number: WO 2026/023936

(57) **Abstract**

The present disclosure relates to a battery pack including: a plurality of battery cells; and a pack case configured to store the plurality of battery cells and including a cross-beam configured to partition the plurality of battery cells and having a through-hole formed therein to allow venting gas generated from the battery cells to pass therethrough.

## Description

### TECHNICAL FIELD

The present disclosure relates to a battery pack and a vehicle including the same.

This application is based on and claims priority from Korean Patent Application No. 10-2024-0099335, filed on July 26, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density and the like, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack.

A common method for configuring a battery pack by connecting multiple battery cells in series/parallel is performed by preferentially configuring a battery module including one or more battery cells and then by adding other components to one or more battery modules to configure a battery pack or battery rack. Recently, cell-to-pack-type battery packs in which multiple battery cells are directly stored in a pack housing or the like, instead of modularizing the same, have been manufactured.

Meanwhile, since a battery cell involves a chemical reaction during charging and discharging, its performance may deteriorate when used at temperatures exceeding the appropriate level. Moreover, if thermal control is not properly maintained at the appropriate temperature, there remains a potential risk of unexpected ignition or explosion. Accordingly, if a thermal event such as thermal runaway occurs inside the battery pack including multiple battery cells, the high-temperature gas and flame discharged from the battery cell provided therein may propagate to adjacent battery modules, leading to chain reaction explosions of the battery modules, which poses a significant safety risk.

In conventional battery packs, a venting device is provided to reduce the internal pressure of the pack case when a thermal event occurs in a battery cell or battery module. However, venting gas or discharged substances are obstructed by the cross-beams that are configured to partition the battery cells or battery modules, making it difficult for the venting gas to move directly to the venting device. As a result, there is a problem that heat accumulates inside the pack case, especially in the cross-beam, thereby accelerating thermal runaway.

Therefore, it is necessary to develop a structure capable of quickly moving high-temperature gas or flames generated inside the battery module, when thermal runaway occurs in the battery module, to the venting device, thereby dissipating heat buildup inside the battery pack.

### DISCLOSURE

### Technical Problem

The present disclosure is designed to solve the problems of the related art, and therefore the present disclosure is directed to providing a battery pack capable of quickly discharging high-temperature gases or flames to the outside when thermal runaway occurs in the battery module, thereby preventing or suppressing thermal runaway propagation between the battery modules and improving safety and reliability.

In addition, the present disclosure is also to provide a vehicle that includes such a battery pack.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; and a pack case configured to store the plurality of battery cells and comprising a cross-beam configured to partition the plurality of battery cells and having a through-hole formed therein to allow venting gas generated from the battery cells to pass therethrough.

The through-hole may be formed at least on one longitudinal end of the cross-beam.

The pack case may include a side frame configured to surround the plurality of battery cells and connected to at least one end of the cross-beam, and the through-hole may be formed on a side where the cross-beam and the side frame are connected.

The battery pack according to an embodiment of the present disclosure may further include a plurality of module cases configured to store the plurality of battery cells by grouping them, and having a venting hole formed on at least one side thereof to allow the venting gas to be discharged to the outside.

The pack case may include a venting device provided on at least one side and configured to discharge the venting gas to the outside.

The through-hole may be configured to allow the venting gas to move across the cross-beam toward the venting device.

The battery pack according to an embodiment of the present disclosure may further include a cover member configured to cover the through-hole and open and close the through-hole.

The cover member may be provided to be attached to the cross-beam.

The cover member may be configured to be openable in only one direction.

The cover member may include an opening portion configured to be ruptured and opened by pressure of the venting gas.

The cover member may include a stopper provided in the opening portion so as to be caught by the cross-beam when the opening is closed.

In another aspect of the present disclosure, there is provided a vehicle including a battery pack according to the present disclosure.

### Advantageous Effects

According to one aspect of the present disclosure, when a thermal event occurs in a battery cell, venting gas can move inside the pack case through the through-hole formed in the cross-beam. Therefore, since the venting gas can quickly move to another place, it is possible to reduce the time during which the venting gas stays in the battery cell where the thermal event occurred.

In addition, according to another aspect of the present disclosure, when thermal runaway occurs in a battery cell, high-temperature gas or flames can be quickly discharged to the outside of the battery pack, thereby dissipating heat buildup inside the battery pack. As a result, the propagation of thermal runaway between battery cells may be prevented or suppressed in the battery pack, thereby ensuring the safety and reliability of the battery pack.

In addition, according to another aspect of the present disclosure, it is possible to minimize the thermal energy transferred to adjacent battery cells when thermal runaway occurs in a battery cell.

In addition, according to another aspect of the present disclosure, it is possible to prevent high-temperature gas or flames discharged through the through-hole, when thermal runaway occurs in a battery cell, from flowing beyond the cross-beam and back into the battery cell where the thermal runaway occurred.

In addition, according to another aspect of the present disclosure, it is possible to prevent or delay events, such as fire or explosion, due to thermal runaway of a battery pack or a device equipped with the battery pack.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery pack according to an embodiment of the present disclosure.
FIG. 2 is an exploded perspective view of a battery pack according to an embodiment of the present disclosure.
FIG. 3 is a drawing illustrating a through-hole included in a battery pack according to an embodiment of the present disclosure.
FIG. 4 is a front view of a cross-beam included in a battery pack according to an embodiment of the present disclosure.
FIG. 5 is a front perspective view of a battery module included in a battery pack according to an embodiment of the present disclosure.
FIG. 6 is a rear perspective view of a battery module included in a battery pack according to an embodiment of the present disclosure.
FIG. 7 is an exploded perspective view of a battery module included in a battery pack according to an embodiment of the present disclosure.
FIG. 8 is a cross-sectional view of a battery pack when viewed from above according to an embodiment of the present disclosure, which may be a cross-sectional view taken along line I - I' in FIG. 1.
FIG. 9 is a top view of a battery pack according to an embodiment of the present disclosure, which illustrates the discharge direction of venting gas during thermal runaway of a battery module.
FIG. 10 is a cross-sectional view of a battery pack to which a cover member is applied according to an embodiment of the present disclosure.
FIG. 11 is a front view of a cross-beam included in a battery pack to which a cover member is applied according to an embodiment of the present disclosure.
FIG. 12 is a front view of a cross-beam included in a battery pack to which a cover member is applied according to another embodiment of the present disclosure.
FIG. 13 is a perspective view of a cross-beam included in a battery pack to which a cover member is applied according to another embodiment of the present disclosure, which illustrates a state where a portion of the cover member is open.
FIG. 14 is a top view of a battery pack to which a cover member is applied according to another embodiment of the present disclosure, which illustrates a state where a portion of the cover member is open.
FIG. 15 is a perspective view of a cross-beam included in a battery pack to which a cover member is applied according to another embodiment of the present disclosure.
FIG. 16 is a top view of a battery pack to which a cover member is applied according to another embodiment of the present disclosure.
FIG. 17 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

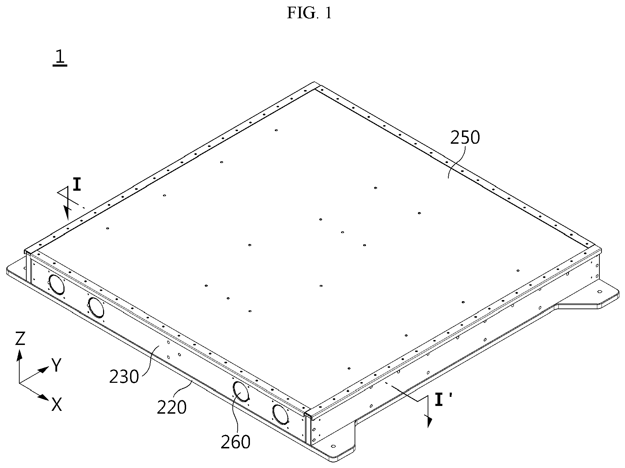

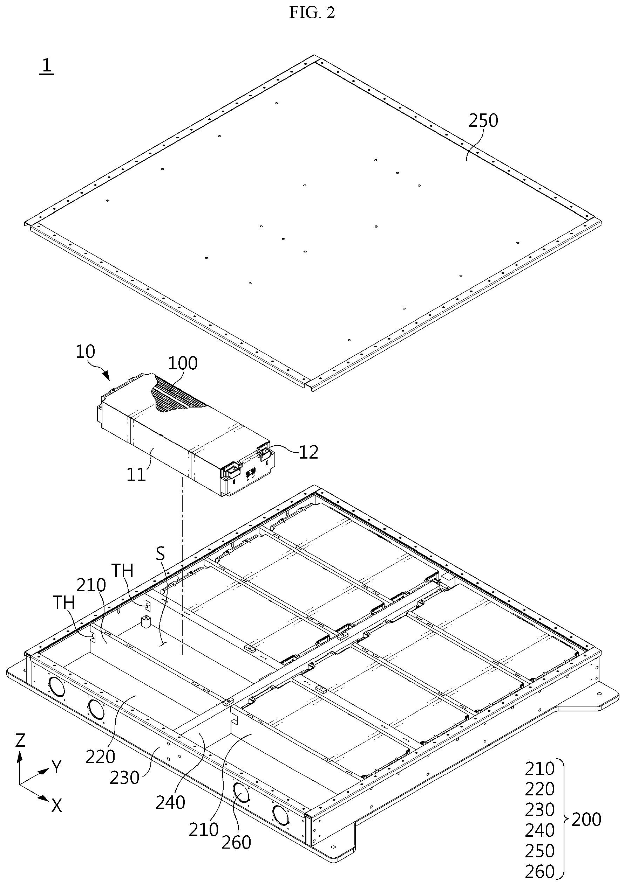

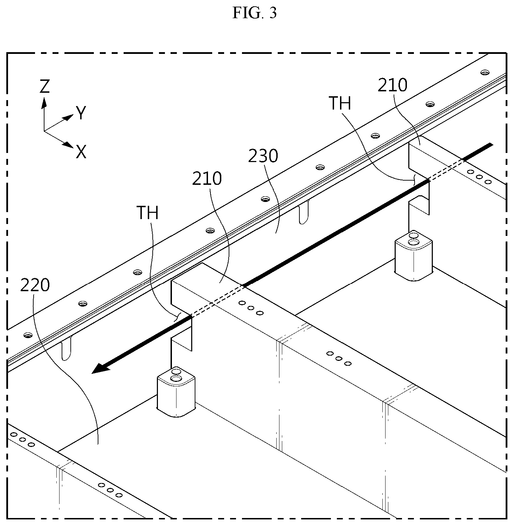

FIG. 1 is an overall perspective view of a battery pack according to an embodiment of the present disclosure, FIG. 2 is an exploded perspective view of a battery pack according to an embodiment of the present disclosure, and FIG. 3 is a drawing illustrating a through-hole included in a battery pack according to an embodiment of the present disclosure.

Referring to FIGS. 1 to 3, a battery pack 1 according to an embodiment of the present disclosure includes a battery cell 100 and a pack case 200.

Referring to FIG. 2, a plurality of battery cells 100 may be included. In addition, the plurality of battery cells 100 may include an electrode assembly, a cell case that stores the electrode assembly, and an electrode lead that is connected to the electrode assembly and extends to the outside of the cell case, thereby functioning as an electrode terminal. In this case, the plurality of battery cells 100 may be electrically connected to each other.

The battery cell 100 may be a pouch-type secondary battery. A cell case of such a pouch-type secondary battery may be configured as a pouch in which a metal layer made of aluminum is interposed between polymer layers.

The present disclosure is not limited to a specific type or shape of the battery cell 100, and various battery cells 100 known at the time of filing of the present disclosure may be applied to configure the battery pack 1 of the present disclosure. In the present embodiment, although a pouch-type secondary battery with high energy density and easy stacking will be described as shown in the drawing, it is obvious that a cylindrical or prismatic secondary battery may also be applied to the battery cell 100.

The plurality of battery cells 100 may be disposed side by side in the front-back direction (X-axis direction) while standing in the vertical direction (Z-axis direction).

The pack case 200 may be configured to store the plurality of battery cells 100. The pack case 200 may have a plurality of storage spaces S configured to store the plurality of battery cells by dividing them. The storage space S is an empty space and may be configured in a shape capable of storing a predetermined number of battery cells 100 therein.

The pack case 200 may be made of a material capable of securing mechanical strength, such as metal, for example, steel or SUS, or plastic, or may include such a material in order to safely protect the battery cells 100 stored therein.

In addition, referring to FIG. 2, the pack case 200 may include a cross-beam 210. The cross-beam 210 may be provided among the plurality of battery cells 100. A plurality of cross-beams 210 may be provided. The cross-beams 210 may be configured to partition the plurality of storage spaces S. That is, the cross-beams 210 may be configured to partition the battery cells 100 provided in the storage spaces S arranged in multiple columns and rows.

When a thermal event occurs in a battery cell 100, the movement of venting gas or the like may be impeded due to the cross-beam 210 provided among the battery cells 100. In this case, heat of the battery pack 1 may accumulate inside, thereby accelerating thermal runaway between the battery cells 100.

To solve this, the battery pack 1 according to an embodiment of the present disclosure may have a through-hole TH formed in the cross-beam 210. The through-hole TH may be formed to pass through the cross-beam 210. The through-hole TH may be configured to allow venting gas generated in the battery cell 100 to pass therethrough. In addition, the through-hole TH may be formed approximately in the central portion of the cross-beam 210 in the height direction.

Accordingly, as indicated by the bold arrow in FIG. 3, when a thermal event occurs in a battery cell 100, venting gas may move inside the pack case 200 through the through-holes TH provided in the cross-beams 210.

According to the above-implemented configuration of the present disclosure, when a thermal event occurs in a battery cell 100, the venting gas may quickly move to another place, so that the time during which the venting gas stays in the battery cell 100 where the thermal event occurred may be reduced. In addition, heat accumulation may be minimized near the cross-beam 210. As a result, thermal runaway propagation between the battery cells 100 may be prevented or suppressed inside the battery pack 1, thereby ensuring the safety and reliability of the battery pack 1.

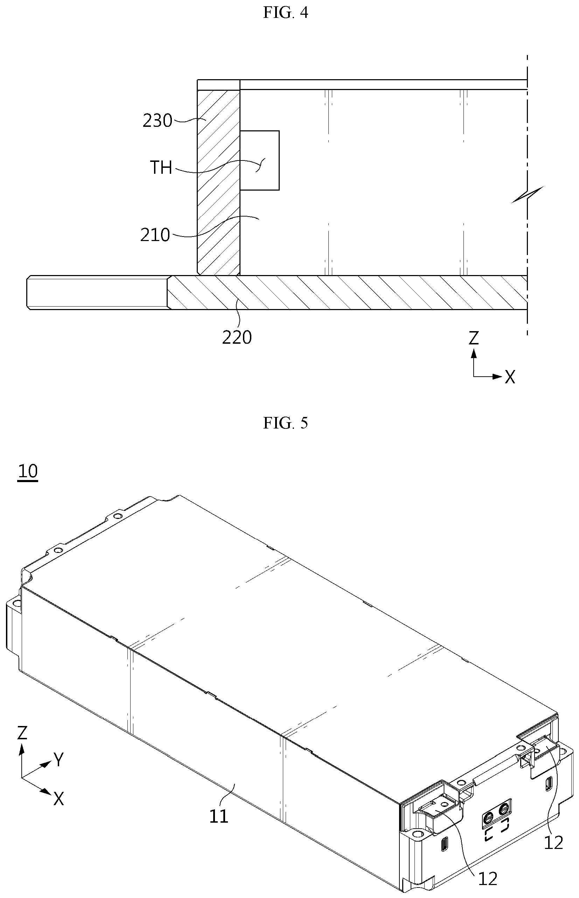

FIG. 4 is a front view of a cross-beam included in a battery pack according to an embodiment of the present disclosure.

Referring to FIG. 2 and FIG. 4, the pack case 200 according to an embodiment of the present disclosure may include a base frame 220 and a side frame 230.

The base frame 220 may form the bottom surface of the pack case 200 and may be configured in the form of a square plate. In addition, the base frame 220 may be configured so that a plurality of battery cells 100 may be seated on its upper surface. Furthermore, the base frame 220 may have a flat upper surface so that a plurality of battery modules 10 may be stably seated thereon.

The side frame 230 may extend upward from respective edges of the base frame 220. The side frame 230 may have a plurality of unit walls to surround the plurality of battery cells 100 or battery modules 10. More specifically, the plurality of side frames 230 may include a right wall located at the -X-direction end of the base frame 220, a rear wall located at the +Y-direction end, a left wall located at the +X-direction end, and a front wall located at the -Y-direction end, respectively, to form the side surfaces of the pack case 200.

In addition, the pack case 200 may further include a center beam 240 provided to connect the side frames 230 facing each other, among the plurality of side frames 230. For example, the center beam 240 may be configured to connect the front wall and the rear wall. The center beam 240 may be configured to extend in the front-back direction.

Meanwhile, the pack case 200 may further include a pack lid 250 coupled to the top of the side frame 230. The pack lid 250 may be configured to form the upper surface of the pack case 200. The pack lid 250 may be configured to cover the top of the battery cells 100.

The cross-beam 210 may be configured to connect the center beam 240 and the side frame 230. For example, a plurality of cross-beams 210 may be disposed to be spaced apart from each other in the front-back direction. In addition, the cross-beam 210 may be configured to extend in the left-right direction. Accordingly, as illustrated in FIG. 2, the storage spaces S may be partitioned and arranged in four rows and two columns by the cross-beams 210.

The through-hole TH may be formed at least at one longitudinal end of the cross-beam 210. For example, as disclosed in the embodiment illustrated in FIG. 4, the through-hole TH may be formed on the longitudinal outer side of the cross-beam 210.

In particular, the through-hole TH may be formed on the side where the cross-beam 210 and the side frame 230 are connected. That is, the through-hole TH may be formed along the surface of the side frame 230. Accordingly, the venting gas may move along the side frame 230. In addition, the through-hole TH may be provided in the cross-beam 210 at a position distant from the center beam 240.

According to the above-implemented configuration of the present disclosure, since the through-hole TH is formed on the outer side of the cross-beam 210, that is, on the side of the side frame 230, the venting gas may be prevented from moving beyond the center beam 240 to another battery cell 100.

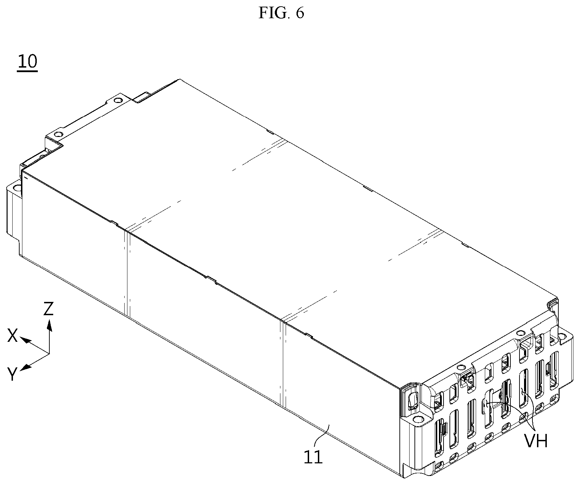

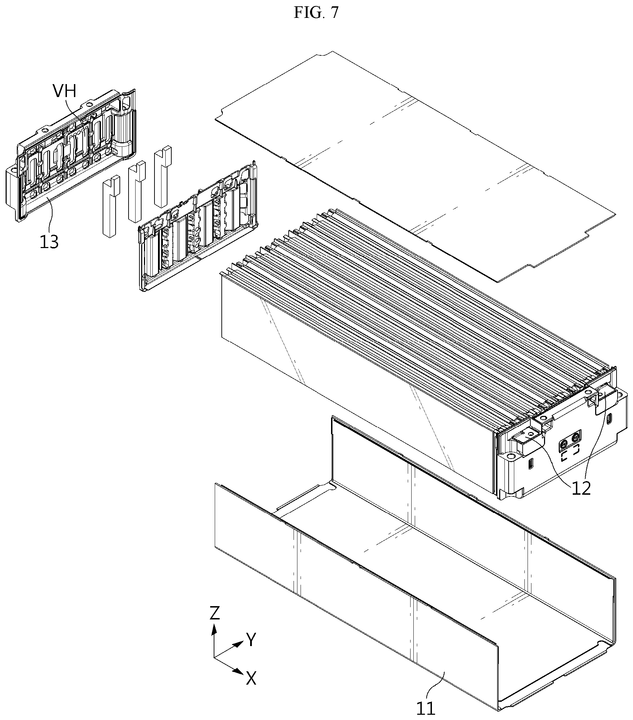

FIG. 5 is a front perspective view of a battery module included in a battery pack according to an embodiment of the present disclosure, FIG. 6 is a rear perspective view of a battery module included in a battery pack according to an embodiment of the present disclosure, and FIG. 7 is an exploded perspective view of a battery module included in a battery pack according to an embodiment of the present disclosure.

Referring to FIGS. 5 to 7, a plurality of battery cells 100 may be modularized into one or more battery modules 10. That is, a battery pack 1 according to the present disclosure may include a plurality of battery modules 10, and a plurality of battery cells 100 included in the battery pack 1 may be divided and included in the plurality of battery modules 10. In this case, the plurality of battery cells 100 included in the battery module 10 may be electrically connected to each other.

The plurality of battery modules 10 may be respectively provided in the storage spaces S of the pack case 200. The plurality of battery modules 10 may be partitioned and separated by the cross-beams 210. In particular, the battery pack 1 according to the present disclosure may include a module case 11.

The module case 11 may be configured to have an empty space formed inside and store at least some of the plurality of battery cells 100 in the inner space. In particular, a plurality of module cases 11 may be provided. The module case 11 may be configured to store the battery cells 100 provided in each storage space S.

That is, the module case 11 may be provided in each storage space S to group a plurality of battery cells 100 into a plurality of battery modules 10, and may be a boundary that physically confines the inner space of each battery module 10.

In addition, the battery module 10 may have a module terminal 12 configured to be electrically connected to a plurality of battery cells 100. The module terminal 12 may include a positive electrode terminal and a negative electrode terminal. The module terminal 12 may be configured to be electrically or communicatively connected to a control device such as a BMS provided in the pack case 200. The module terminal 12 may be configured to be exposed at least partially to the outside of the module case 11.

The module terminal 12 may be provided on the side from which the electrode leads of the battery cell 100 extends outward. For example, the module terminal 12 may be provided on the front side of the module case 11.

In addition, the battery module 10 may include a busbar assembly 13 configured to cover at least one side of the plurality of battery cells 100. The busbar assembly 13 may include a busbar frame and a plurality of busbars.

In addition, the battery module 10 may include a venting hole VH. The venting hole VH may be configured to allow gas generated from the battery cells 100 stored inside the module case 11 to be discharged to the outside of the module case 11. That is, the venting hole VH may be provided in the module case 11 and configured to enable directional venting to a specific direction.

A plurality of venting holes VH may be provided and arranged in multiple columns and rows.

The venting hole VH may be formed on the opposite side of the side where the module terminal 12 is provided. For example, as shown in FIGS. 6 and 7, the module terminal 12 may be provided on the front side of the module case 11 (in the +X-axis direction in FIGS. 6 and 7), and the venting hole VH may be formed on the rear side of the module case 11 (in the -X-axis direction in FIGS. 6 and 7).

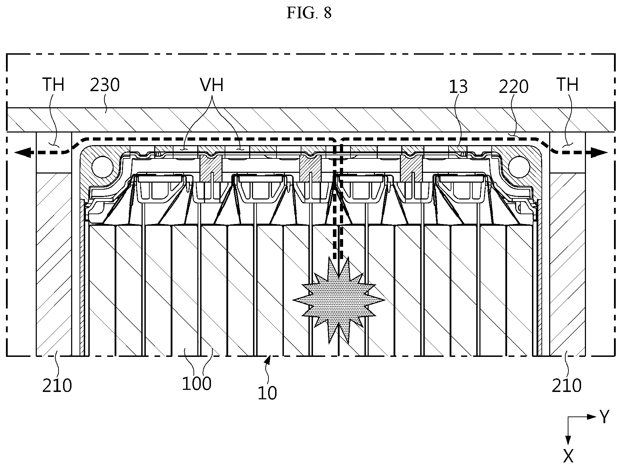

FIG. 8 is a cross-sectional view of a battery pack when viewed from above according to an embodiment of the present disclosure, which may be a cross-sectional view taken along line I - I' in FIG. 1.

The through-hole TH may be provided on the side where the venting hole VH is formed.

Specifically, referring to FIG. 2, a plurality of battery modules 10 may be disposed inside the pack case 200 so that the module terminals 12 face each other. For example, some of the plurality of module cases 11 may be disposed so that their front sides face each other. That is, some of the plurality of module cases 11 may be disposed so that their rear sides are far from each other.

In this case, the venting hole VH may be formed on the rear side of the module case 11, and the through-hole TH may be formed on the side where the cross-beam 210 and the side frame 230 are connected. That is, both the venting hole VH and the through-hole TH may be provided toward the outside of the battery pack 1.

Accordingly, as indicated by the dotted arrows in FIG. 8, when thermal runaway occurs in a battery module 10, venting gas or the like may be discharged through the venting hole VH provided on the rear side of the battery module 10 (both left and right sides of the pack case 200) and flow in the space between the battery module 10 and the side frame 230. In addition, the venting gas or the like discharged from the venting hole VH may move directly toward the through-hole TH. That is, the venting gas or the like may pass through the through-holes TH of the cross-beams 210 and move to both sides of the pack case 200 in the front-back direction.

According to the above-implemented configuration of the present disclosure, since the venting hole VH and the through-hole TH are provided on the same side, the venting gas may move smoothly. Accordingly, the temperature of the battery cell 100 and/or the cross-beam 210 may be prevented from continuously rising due to the heat island effect.

In addition, if the through-hole TH is not provided, the venting gas may move only through the space between the battery module 10 and the pack lid 250, so that dust and other discharged substances may accumulate in adjacent battery modules 10 during movement, which may cause heat to be concentrated. However, according to the above-implemented configuration of the present disclosure, a venting path for the venting gas and the like may be secured inside the battery pack 1. In addition, the venting path may be guided to a specific direction, instead of being distributed in various directions, in the battery pack 1, thereby preventing unintended damage to other components.

Furthermore, according to the above-implemented configuration of the present disclosure, in a case where a plurality of battery modules 10 are disposed so that their module terminals 12 face each other, the venting gas or flames discharged from the venting hole VH may be more effectively prevented from heading toward the module terminal 12.

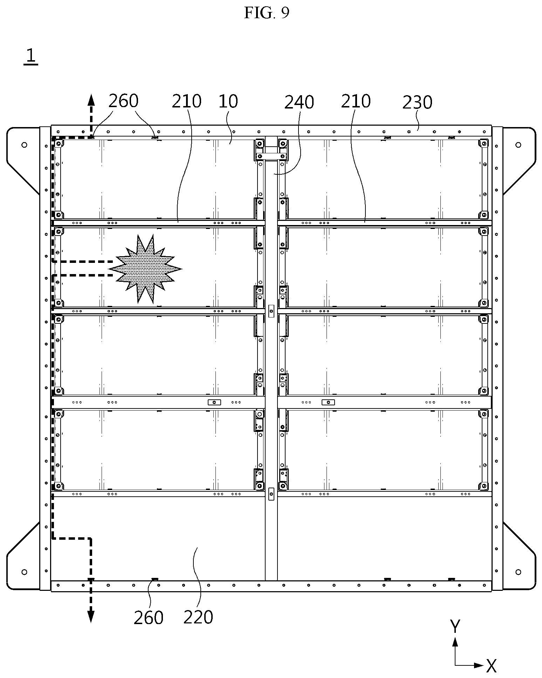

FIG. 9 is a top view of a battery pack according to an embodiment of the present disclosure, which illustrates the discharge direction of venting gas during thermal runaway of a battery module.

The pack case 200 may include a venting device 260. The venting device 260 may be configured to discharge venting gas or flames generated in the battery module 10 to the outside of the pack case 200. The venting device 260 may be configured in the form of a hole formed from the inside to the outside of the pack case 200. Alternatively, the venting device 260 may be mounted in the hole of the pack case 200 and configured operate when discharges are generated inside the pack case 200.

The venting device 260 may be provided on the side of the pack case 200, that is, on the side frame 230. A plurality of venting devices 260 may be provided. The venting device 260 may be located on at least some of the unit walls of the side frame 230. In addition, one venting device 260 may be formed on each of two or more unit walls, or two or more venting devices 260 may be formed on each unit wall.

For example, referring to FIG. 9, a plurality of venting devices 260 may be provided on each of the front and rear walls. In addition, the plurality of venting devices 260 may be provided symmetrically with respect to the central axis of the side frame 230.

According to the above-implemented configuration of the present disclosure, in the event of an abnormal situation of the battery cell 100, high-temperature gas or the like may be discharged in both directions of the pack case 200, so it is easy to discharge the gas more quickly to the outside of the pack case 200.

Meanwhile, the number of installations or locations of the venting devices 260 described in the embodiment in FIG. 9 are only examples, and may be changed to various other values or locations.

The through-hole TH may be configured so that the venting gas may move across the cross-beam 210 toward the venting device 260. That is, as the through-hole TH is provided in the cross-beam 210, the venting gas of the battery module 10 provided between the cross-beams 210 may be guided to move to the venting device 260.

More specifically, referring to FIG. 9, in the battery pack 1 according to an embodiment of the present disclosure, the cross-beam 210 may be disposed along the front-back direction, and the venting device 260 may be provided on the front-back direction side frames 230.

In addition, the venting device 260 may be configured to be in communication with the space between the battery module 10 and the side frame 230. In this case, the venting gas or flame discharged from the battery module 10 may be guided to the venting device 260 along the direction in which the side frame 230 extends. That is, as indicated by the arrows in FIG. 9, the venting gas or the like discharged to the rear side of the battery module 10 through the venting hole VH may move to the space between the battery module 10 and the side frame 230, and then move to the venting device 260 through the through-hole TH beyond the cross-beam 210.

According to the above-implemented configuration of the present disclosure, the venting direction of the battery module 10 and the movement direction in the venting path inside the battery pack 1 may be configured to be connected to each other. Accordingly, when a thermal event occurs in the battery module 10, the cover member 300 may guide the venting gas or flame to the venting device 260, thereby discharging the same more quickly to the outside of the pack case 200. As a result, the internal pressure inside the pack case 200 may be prevented from increasing.

In addition, it is possible to minimize movement of the venting gas or flame to other battery modules 10 or module terminals 12 while the venting gas or flame moves to the venting device 260. Accordingly, additional chain ignition of other battery modules 10 may be prevented.

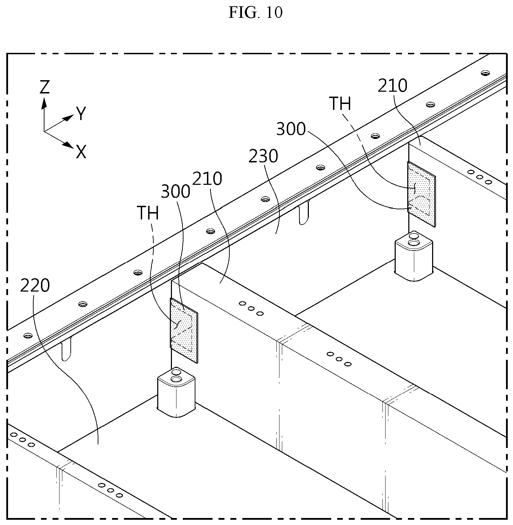

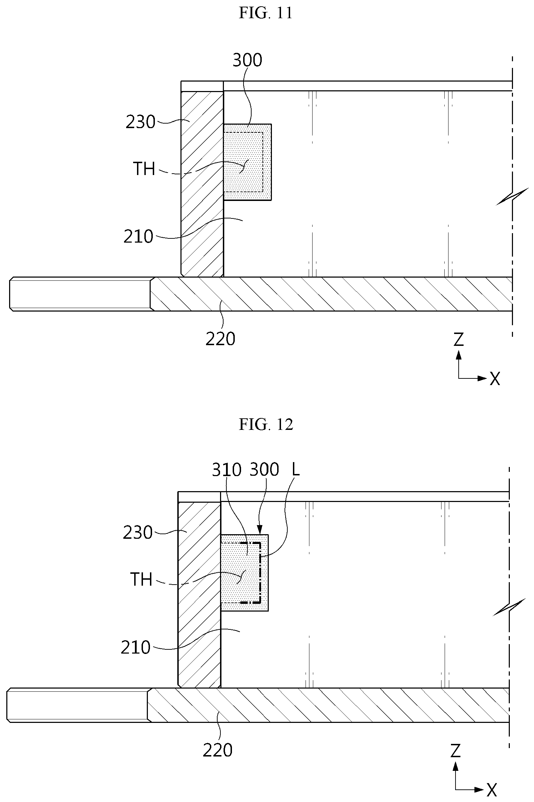

FIG. 10 is a cross-sectional view of a battery pack to which a cover member is applied according to an embodiment of the present disclosure, and FIG. 11 is a front view of a cross-beam included in a battery pack to which a cover member is applied according to an embodiment of the present disclosure.

Referring to FIG. 10 and FIG. 11, a battery pack 1 according to an embodiment of the present disclosure may further include a cover member 300. The cover member 300 may be configured to at least partially cover the through-hole TH. The cover member 300 may be configured to cover at least one side of the through-hole TH.

The cover member 300 may be attached to the cross-beam 210. The cover member 300 may be attached to at least one side of the cross-beam 210. The cover member 300 may be configured to be larger than the size of the through-hole TH.

The cover member 300 may be configured in the form of a sheet. The cover member 300 may be configured to have a thickness of approximately 0.1t. In addition, the cover member 300 may be made of a material having excellent heat resistance and/or fire resistance, such as SUS material.

Therefore, the cover member 300 may maintain morphological stability without deformation even when high temperature heat is generated, thereby stably blocking high-temperature gas or flame generated from the battery cell 100.

The cover member 300 may be configured to be at least partially openable by venting gas or flame. Specifically, at least a portion of the cover member 300 may be configured to be opened by the pressure of the venting gas toward the through-hole TH. The cover member 300 may be configured to be ruptured and opened. Alternatively, at least a portion of the cover member 300 may be configured to be completely separated from the cross-beam 210. For example, the cover member 300 is adhered to the cross-beam 210 and when a thermal event occurs in an adjacent battery module 10, the adherence may be released by the pressure or heat of the venting gas.

According to the above-implemented configuration of the present disclosure, when a thermal event occurs in a battery module 10, the cover member 300 is configured to open the through-hole TH by the venting gas or the like, so that the venting gas or the like may move through the through-hole TH. Accordingly, the venting gas or flame may be quickly discharged to the outside of the battery pack 1, thereby dissipating the heat buildup inside the battery pack 1.

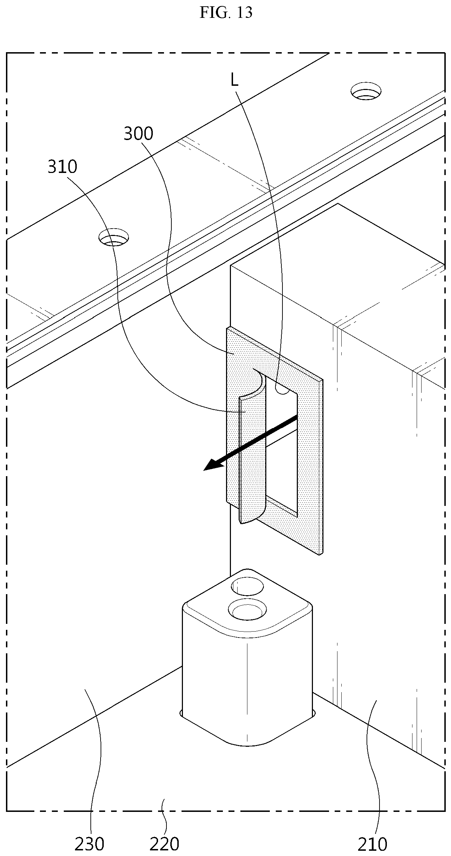

FIG. 12 is a front view of a cross-beam included in a battery pack to which a cover member is applied according to another embodiment of the present disclosure. In addition, FIG. 13 is a perspective view of a cross-beam included in a battery pack to which a cover member is applied according to another embodiment of the present disclosure, which illustrates a state where a portion of the cover member is open.

As an example, as disclosed in the embodiment illustrated in FIGS. 12 and 13, the cover member 300 may have an opening portion 310. The opening portion 310 may be at least a part of the cover member 300. The opening portion 310 may be configured to cover the through-hole TH. In addition, the opening portion 310 may be configured to be openable by being broken by the pressure of the venting gas.

In addition, the cover member 300 may have a cutting line L. The cutting line L may be configured to form a border of the opening portion 310. The cutting line L may be provided on the side distant from the side frame 230. That is, the opening portion 310 may be opened on the side far from the side frame 230.

According to the above-implemented configuration of the present disclosure, when a thermal event occurs in a specific battery cell 100, the cutting line L may be ruptured and the opening portion 310 may be opened outward from the cross-beam 210. Accordingly, venting gas or the like may move beyond the cross-beam 210 through the opened through-hole TH (see the bold arrow in FIG. 13).

As an example, as disclosed in the embodiment illustrated in FIG. 12, the cutting line L may be formed at a position corresponding to the through-hole TH. That is, the opening portion 310 may be configured to have a size corresponding to the through-hole TH. In addition, the cutting line L may be configured to have a shape corresponding to the through-hole TH. The cutting line L may be provided at least partially along the outer periphery of the through-hole TH.

As a more specific example, the cutting line L may be provided along the vertical edge provided on the inner side of the through-hole TH. Furthermore, the cutting line L may be provided along a part of the horizontal edge of the through-hole TH. As a result, the cutting line L may be ruptured more easily, so that a larger amount of venting gas may be discharged through the through-hole TH. As another embodiment, the cutting line L may be provided at least partially between the outer periphery of the through-hole TH and the outermost edge of the cover member 300. That is, the opening portion 310 may be configured to be larger than the through-hole TH. In this case, at least a part of the opening portion 310 may be configured to face the cross-beam 210.

According to the above-implemented configuration of the present disclosure, when the opening portion 310 is closed, at least a part of the opening portion 310 may be configured to be caught by the cross-beam 210. When the through-hole TH is opened and the venting gas or flame is discharged outside the through-hole TH, the through-hole TH may return back to a closed state. In this case, according to the above-implemented configuration of the present disclosure, a part of the opening portion 310 may be caught by the cross-beam 210 so that the through-hole TH may remain in the closed state. Accordingly, the venting gas or flame discharged to the outside through the opened through-hole TH may be fundamentally prevented from moving back to the battery module 10 where the thermal event occurred.

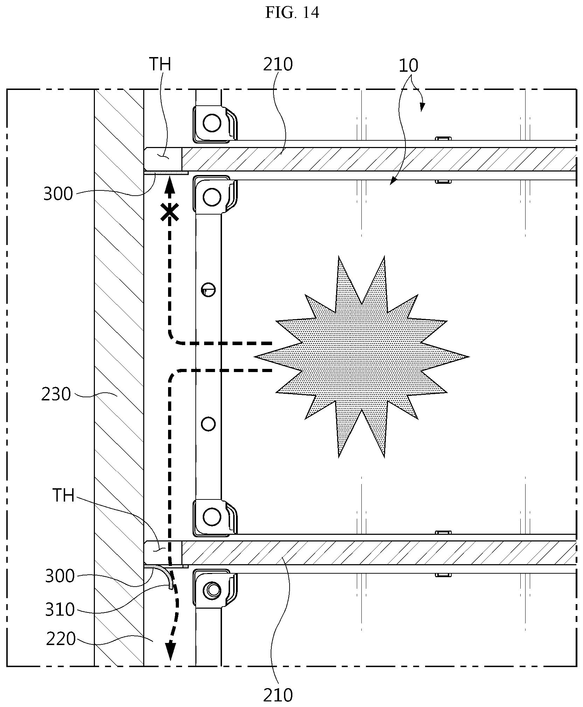

FIG. 14 is a top view of a battery pack to which a cover member is applied according to another embodiment of the present disclosure, which illustrates a state where a portion of the cover member is open.

In particular, the cover member 300 may be configured to be opened only in one direction. Specifically, the cover member 300 may be configured to be opened only in the direction in which the venting device 260 is provided.

That is, as indicated by the dotted arrows in FIG. 14, the cover member 300 may be configured to prevent, when a thermal event occurs in a battery module 10, the venting gas or flame discharged through the through-hole TH from moving back to the battery module 10 where the thermal event occurred.

Specifically, the cover member 300 opened by the pressure of the venting gas may be configured to close the through-hole TH again after the venting gas passes through the through-hole TH. Accordingly, reverse movement of the venting gas or the like, in the direction other than the venting guide direction, may be suppressed.

According to the above-implemented configuration of the present disclosure, directionality may be imparted to the venting gas flow. In particular, the venting gas may be guided to move toward the venting device 260, thereby quickly discharging the same to the outside of the pack case 200. Accordingly, the thermal runaway in the battery pack 1 may be suppressed or delayed.

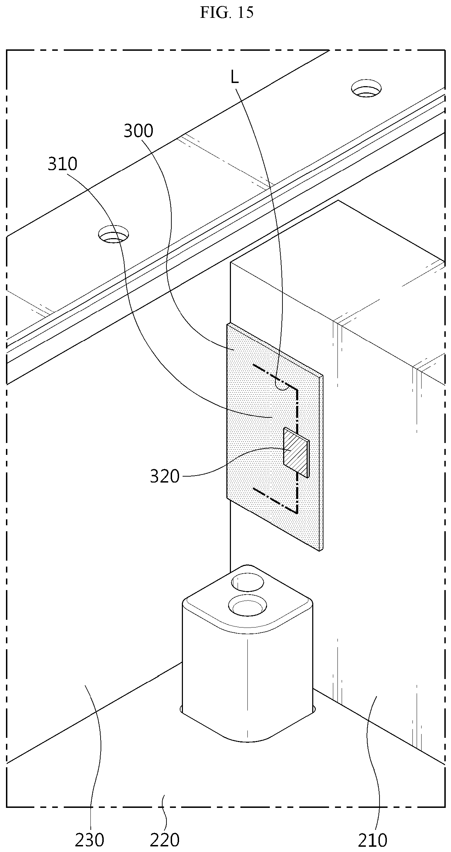

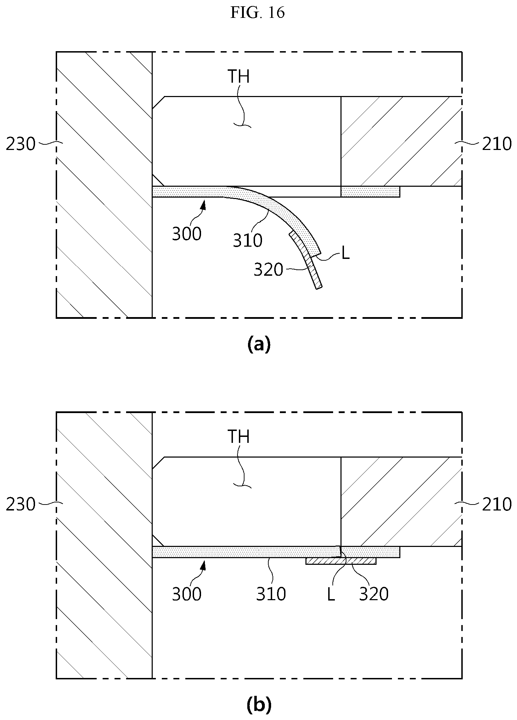

FIG. 15 is a perspective view of a cross-beam included in a battery pack to which a cover member is applied according to another embodiment of the present disclosure, and FIG. 16 is a top view of a battery pack to which a cover member is applied according to another embodiment of the present disclosure. In particular, FIG. 16(a) is a drawing illustrating a function of a stopper 320 when the cover member 300 is open, and FIG. 16(b) is a drawing illustrating a function of a stopper 320 when the cover member 300 is closed.

As another example, as disclosed in the embodiment illustrated in FIGS. 15 and 16, the cover member 300 may have a stopper 320 to further suppress reverse movement of the venting gas discharged from a battery module 10 in a direction other than the venting guide direction. The stopper 320 may be provided in the opening portion 310. The stopper 320 may be configured to be caught by the cross-beam 210 when the opening portion 310 is closed. The stopper 320 may be configured to protrude outward from the open part of the opening portion 310.

Accordingly, the through-hole TH provided on one side of the battery module 10 where the thermal event occurred may be opened, and the through-hole TH provided on the other side may remain in the closed state without being opened.

According to the above-implemented configuration of the present disclosure, when the through-hole TH is opened and venting gas or flame is discharged outside the through-hole TH, the through-hole TH returns back to the closed state, and in this case, the stopper 320 may be caught by the cross-beam 210, so that the through-hole TH may be maintained in the closed state. Accordingly, the venting gas or flame discharged outside through the opened through-hole TH may be fundamentally prevented from moving back toward the battery module 10 where the thermal event occurred.

That is, according to the above-implemented configuration of the present disclosure, when thermal runaway occurs in a battery module 10, as shown in FIG. 16(a), the venting gas or flame generated inside the battery module 10 may be smoothly discharged to the outside of the battery module 10. In addition, as shown in FIG. 16(b), since the through-hole TH is prevented from opening in the opposite direction by the stopper 320, the discharged venting gas or flame may be prevented from moving back to the battery module 10.

In addition, according to the above-implemented configuration of the present disclosure, the venting gas may be further guided to move in one direction, particularly toward the venting device 260. Therefore, the thermal runaway propagation may be effectively prevented or delayed by minimizing the thermal propagation to neighboring battery cells 100 or battery modules 10.

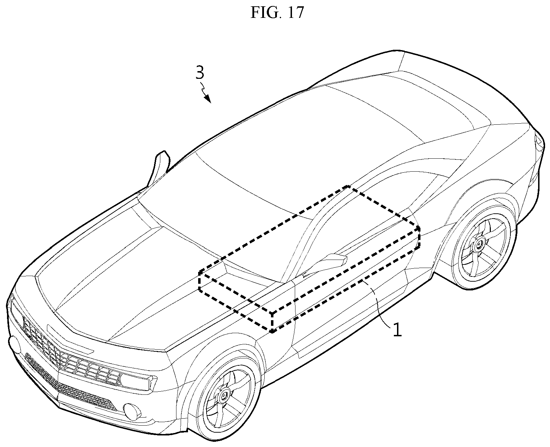

FIG. 17 is a schematic perspective view of a vehicle including a battery pack according to an embodiment of the present disclosure.

Referring to FIG. 17, a vehicle 3 according to an embodiment of the present disclosure may include one or more battery packs 1 according to an embodiment of the present disclosure. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 may operate using the power supplied from a battery pack 1 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery pack comprising:
a plurality of battery cells; and
a pack case configured to store the plurality of battery cells and comprising a cross-beam configured to partition the plurality of battery cells and having a through-hole formed therein to allow venting gas generated from the battery cells to pass therethrough.

2. The battery pack according to claim 1,
wherein the through-hole is formed at least on one longitudinal end of the cross-beam.

3. The battery pack according to claim 1,
wherein the pack case comprises
a side frame configured to surround the plurality of battery cells and connected to at least one end of the cross-beam, and
wherein the through-hole is formed on a side where the cross-beam and the side frame are connected.

4. The battery pack according to claim 1, further comprising
a plurality of module cases configured to store the plurality of battery cells by grouping them, and having a venting hole formed on at least one side thereof to allow the venting gas to be discharged to the outside.

5. The battery pack according to claim 1,
wherein the pack case comprises
a venting device provided on at least one side and configured to discharge the venting gas to the outside.

6. The battery pack according to claim 5,
wherein the through-hole is configured to allow the venting gas to move across the cross-beam toward the venting device.

7. The battery pack according to claim 1, further comprising
a cover member configured to cover the through-hole and open and close the through-hole.

8. The battery pack according to claim 7,
wherein the cover member is provided to be attached to the cross-beam.

9. The battery pack according to claim 7,
wherein the cover member is configured to be openable in only one direction.

10. The battery pack according to claim 7,
wherein the cover member comprises
an opening portion configured to be ruptured and opened by pressure of the venting gas.

11. The battery pack according to claim 10,
wherein the cover member comprises
a stopper provided in the opening portion so as to be caught by the cross-beam when the opening is closed.

12. A vehicle comprising a battery pack according to any one of claims 1 to 11.
